# EUROPEAN PATENT APPLICATION

(11) **EP 4 385 859 A1**
(43) Date of publication of application: **19.06.2024**
(21) Application number: 22855107.3
(22) Date of filing: 29.06.2022
(51) Int. Cl.: B62D 21/02

(54) **LOWER VEHICLE BODY FRONT STRUCTURE AND VEHICLE**

(30) Priority: 13.08.2021 CN 202110931821
(71) Applicant: Great Wall Motor Company Limited, Hebei 071000 (CN)
(72) Inventor: CHEN, Qiang, Baoding, Hebei 071000 (CN); HE, Zhijie, Baoding, Hebei 071000 (CN); ZHANG, Tao, Baoding, Hebei 071000 (CN); ZHANG, Shuren, Baoding, Hebei 071000 (CN); LIANG, Xinyu, Baoding, Hebei 071000 (CN); WU, Wenbo, Baoding, Hebei 071000 (CN); LI, Ren, Baoding, Hebei 071000 (CN); LI, Yuntao, Baoding, Hebei 071000 (CN)
(74) Representative: Klunker IP Patentanwälte PartG mbB
(86) International application number: PCT/CN2022/102333
(87) International publication number: WO 2023/016123

(57) **Abstract**

A lower vehicle-body front structure and a vehicle are provided in the present application. The lower vehicle-body front structure includes front longitudinal beams of an engine room respectively arranged at two sides, a front anti-collision beam connected between front ends of the front longitudinal beams of the engine room at the two sides, and a rear transverse beam of the engine room connected between rear ends of the front longitudinal beams of the engine room at the two sides. The front longitudinal beams of the engine room at the two sides are respectively connected to a front shock absorber seat. Front ends of the front longitudinal beams of the engine room at the two sides are connected to a front anti-collision beam assembly through connecting seats, and the connecting seat is provided with an energy absorption part. Outer sides of the front shock absorber seats at the two sides are respectively connected to side beams of front wheel covers, and an upper transverse beam of the front engine room is connected between side beams of the front wheel covers at the two sides, and the upper transverse beam of the front engine room is arched in a direction towards a front of a vehicle body, and an energy absorption box of the upper transverse beam of the front engine room is respectively connected between the upper transverse beam of the front engine room and each of the front shock absorber seats at the two sides. The extension section of the front anti-collision beam, the energy absorption part and the energy absorption box of the upper transverse beam of the front engine room are arranged in sequence in a direction pointing to a rear of the vehicle body. The lower vehicle-body front structure according to the present application can effectively improve collision protection performance at the front of the vehicle body.

## Description

This application claims priority to the patent application No. 202110931821.7 entitled "LOWER VEHICLE BODY FRONT STRUCTURE" filed in China National Intellectual Property Administration on August 13, 2020, which is incorporated herein by reference in their entirety.

### TECHNICAL FIELD

The present application relates to the technical field of body structures of vehicles, in particular to a lower vehicle-body front structure. Meanwhile, the present application also relates to a vehicle provided with the lower vehicle-body front structure.

### BACKGROUND

In design of a body frame of a front engine room of a vehicle, safety and lightweight design are important issues that are mutually influenced and need to be considered emphatically.

In a structure of the body frame of the front engine room, a front anti-collision beam mainly functions to receive collision from front of the vehicle, and the front anti-collision beam is generally connected to a front longitudinal beam of the engine room through structures such as an energy absorption box of the front anti-collision beam and a connecting bracket. An impact force received by the front anti-collision beam is transmitted to the front longitudinal beam of the engine room along a path from the front anti-collision beam, to the energy absorption box of the front anti-collision beam and to the connecting bracket. The front anti-collision beam and the energy absorption box of the front anti-collision beam are mainly provided to deal with the collision from the front of the vehicle and to function in buffering and absorbing energy, and to prevent an excessive impact force from being directly transmitted to the front longitudinal beam of the engine room, which may further transmit the impact force to a cockpit, or even the longitudinal beam of the engine room directly invades into the cockpit and causes adverse effect on personal safety of drivers and passengers.

In the above-mentioned body frame structure, the front anti-collision beam and the front longitudinal beam of the engine room are disposed at relatively low positions. There is no necessary collision protection measures for a radiator at a front end of the vehicle body and parts above it. When caused collision applies a great impact on an upper part of the front end of the vehicle body, an impact force is easily transmitted directly to an interior of the front engine room, causing serious damage to core components such as an engine. Moreover, due to lack of necessary protection and buffer structures, an excessive impact force may also impact and move backwards components in the front engine room, and invade into the cockpit, causing harm to drivers and passengers.

In addition, an existing connecting bracket for connecting the front anti-collision beam and the front longitudinal beam of the engine room is fixedly mounted at a front end of the front longitudinal beam of the engine room, which is generally simple in structure and mainly functions in connection and mounting, and may also contribute to mounting and connection of surrounding components such as a front subframe and a locking and mounting transverse beam of the engine room. When the impact force from the front anti-collision beam reaches the connecting bracket, the impact force may be directly transferred to the front longitudinal beam of the engine room.

In actual vehicle collision, there is not only impact from the front of a vehicle, but also small overlap impact from a front side of the vehicle. At this moment, an impact force from the collision comes from an end of the front anti-collision beam and is transferred towards a middle of the front engine room at an inclined angle. It is difficult to fully exert an energy absorption and buffering function of the connecting bracket and the energy absorption box of the front anti-collision beam of the bracket of the front anti-collision beam. When the impact force reaches an end of the front longitudinal beam of the engine room, it may cause huge torsional impact damage to the front longitudinal beam of the engine room, which may damage a whole body frame structure at the front engine room and cause impact damage to all components in the front engine room and even to the drivers and passengers in the cockpit.

### SUMMARY

In view of this, the present application aims to propose a lower vehicle-body front structure to improve collision protection performance of a front body.

To achieve above purposes, technical solutions of the present application are implemented as follows.

The lower vehicle-body front structure includes front longitudinal beams of an engine room respectively arranged at two sides, a front anti-collision beam connected between front ends of the front longitudinal beams of the engine room at the two sides, and a rear transverse beam of the engine room connected between rear ends of the front longitudinal beams of the engine room at the two sides, the front longitudinal beams of the engine room at the two sides are respectively connected to front shock absorber seatseats;
both ends of the front anti-collision beam are provided with an extension section extending to outside of the front longitudinal beam of the engine room;
front ends of the front longitudinal beams of the engine room at the two sides are both connected to the front anti-collision beam through connecting seatseats, and a lower part of a rear side of each of the connecting seatseats is provided with an energy absorption part, and the energy absorption part is located at an outer side of the front longitudinal beam of the engine room and is projected towards a rear of the connecting seatseat;
outer sides of the front shock absorber seatseats at the two sides are respectively connected to side beams of front wheel covers, and an upper transverse beam of the front engine room is connected between the side beams of the front wheel covers at the two sides, and the upper transverse beam of the front engine room is arched in a direction towards a front of a vehicle body, and an energy absorption box of the upper transverse beam of the front engine room is respectively connected between the upper transverse beam of the front engine room and each of the front shock absorber seatseats at the two sides; and
in a direction pointing to the front of the vehicle body, the energy absorption box of the upper transverse beam of the front engine room at each side is arranged to be inclined outward, and the extension section, the energy absorption part and the energy absorption box of the upper transverse beam of the front engine room are arranged in sequence in a direction pointing to a rear of the vehicle body.

Further, each end of the upper transverse beam of the front engine room is detachably connected to the side beam of the front wheel cover at a corresponding side; the energy absorption box of the upper transverse beam of the front engine room is detachably connected between the upper transverse beam of the front engine room and the front shock absorber seatseat; and/or,
along a direction towards the rear of the vehicle body, both ends of the upper transverse beam of the front engine room connected to the side beams of the front wheel covers at the two sides are arranged in a gradually rising manner; the energy absorption box of the upper transverse beam of the front engine room is in a grid shape formed by interweaving and connecting a plurality of plate bodies.

Further, each of the connecting seatseats includes a structural main body; the energy absorption part is located at a lower part of a rear side of the structural main body, and a connecting part of the longitudinal beam of the engine room is provided at an inner side of the energy absorption part; the connecting part of the longitudinal beam of the engine room and the energy absorption part are respectively provided with longitudinal-beam connecting holes for connecting the longitudinal beam of the engine room; and a protruding height of the energy absorption part gradually increases along a direction to the front longitudinal beam of the engine room.

Further, the energy absorption part includes a longitudinal plate body fixedly connected to the structural main body and a transverse plate body fixedly connected between the structural main body and the longitudinal plate body, and the connecting part of the longitudinal beam of the engine room includes a connecting plate fixedly connected to the structural main body; a plurality of transverse plate bodies are arranged at intervals in an up-and-down direction, the connecting plate is connected to the longitudinal plate body, and a connecting cavity where an end of the longitudinal beam of the engine room is capable to be inserted is defined between the connecting plate and the longitudinal plate body; and the longitudinal plate body and the connecting plate are respectively provided with the longitudinal-beam connecting holes.

Further, a connecting bracket and a radiator mounting bracket are provided at a top of the structural main body; and the upper transverse beam of the front engine room is detachably connected to the connecting bracket on each of the connecting seatseats.

Further, the front longitudinal beam of the engine room includes a longitudinal beam body, and the longitudinal beam body is provided with a main body part and a reinforcing part; the main body part includes two main beam bodies which are integrally connected in an up-and-down direction, and an interior of each main beam body is hollow, so that the main body part is provided with two cavity structures arranged in the up-and-down direction; and the reinforcement part includes a reinforcement beam body integrally and fixedly connected to a rear of the main body part, and an interior of the reinforcement beam body is hollow, so that a rear of the longitudinal beam body is provided with three cavity structures arranged in the up-and-down direction.

Further, a cross section of the main beam body is octagonal in shape, and a cross section of the reinforcing beam body is rectangular in shape; an upper connecting plate is provided at a top of the main body part, and the upper connecting plate extends along a length direction of the main body part and is located at the rear of the main body part, and the upper connecting plate is arranged close to an outer side of the main body part; and an inner side of the upper connecting plate and an inner side of the main body part below the upper connecting plate are configured to be connected to the front shock absorber seatseats.

Further, rear ends of the front longitudinal beams of the engine room at the two sides are respectively connected to the rear transverse beam of the engine room through connecting assemblies, and support beams are respectively arranged on the rear transverse beam of the engine room, corresponding to the front longitudinal beams of the engine room; each of the support beams is arranged at an upper part of a rear end of the corresponding front longitudinal beam of the engine room and is abutted against and connected to the upper part of the rear end of the front longitudinal beam of the engine room.

Further, the upper part of the rear end of the front longitudinal beam of the engine room is inclined forward; each of the support beams is arranged corresponding to the upper part of the rear end of the front longitudinal beam of the engine room, and a bottom end surface of each of the support beams is in a form of a forward inclined guiding surface; and the upper part of the rear end of the front longitudinal beam of the engine room at least partially extends below the inclined guiding surface.

Further, each of the connecting assemblies includes a connecting plate positioned at an inner side of the front longitudinal beam of the engine room and a torsion box positioned at an outer side of the front longitudinal beam of the engine room; and the connecting plate and the torsion box are connected and enclose to form a cavity body therebetween, the rear transverse beam of the engine room and the support beams form a blockage for a rear port of the cavity body, and the rear end of the front longitudinal beam of the engine room is inserted into the cavity body through a front port of the cavity body.

Further, the torsion box includes a main plate body and a reinforcing rib plate arranged at a side of the main plate body; a plurality of reinforcing rib plates are arranged in transverse and longitudinal directions, and at least part of the plurality of reinforcing rib plates are interwoven and connected to define a plurality of cavity chambers.

Further, connecting points of a front subframe are respectively provided at bottoms of the connecting seats, the front longitudinal beams of the engine room and the connecting assemblies; and the lower vehicle-body front structure further includes a front subframe connected by the connecting points of the front subframe.

Further, in the direction pointing to the front of the vehicle body, the front longitudinal beams of the engine room at the two sides are arranged to be inclined outwards to the two sides of the vehicle body; and the front anti-collision beam is connected to the connecting seat through the energy absorption box of the front anti-collision beam, and the upper transverse beam of the front engine room can be adopted in a form of a tubular beam.

Further, the connecting seats are integrally cast and formed of cast aluminum, and the front longitudinal beams of the engine room and the rear transverse beam of the engine room are integrally extruded and formed of aluminum alloy.

Compared with the prior art, the present application has following advantages.

For the lower vehicle-body front structure according to the present application, with provision of the upper transverse beam of the front engine room with a front arched structure, both ends of the upper transverse beam of the front engine room are respectively connected to front ends of the side beams of the front wheel covers; and meanwhile, the energy absorption box of the upper transverse beam of the front engine room is additionally provided between the upper transverse beam of the front engine room and the front shock absorber seat, so that structural strength of an upper part of the front end of the vehicle body can be effectively improved. In addition, when the upper part of the front end of the vehicle body is subjected to impact from outside, the energy absorption box of the upper transverse beam of the front engine room and the front arched structure of the upper transverse beam of the front engine room can absorb kinetic energy due to their own deformation and collapse, which functions well in buffering and facilitates improved collision protection performance of the front end of the vehicle body.

In addition, the front longitudinal beam of the engine room is designed with the main body part and the reinforcement part, and the reinforcement part is arranged at the rear part of the main body part, so that an overall weight of the longitudinal beam body can be reduced as much as possible while meeting high strength requirements of the rear part of the longitudinal beam body. Meanwhile, provision of the inner cavity structures of the main body part and the reinforcement part can not only make the longitudinal beam body form a good strength support structure, but also greatly reduce self-weight of the longitudinal beam body while meeting overall connection and seat strength of the front longitudinal beam of the engine room. Lightweight design of the front longitudinal beam structure of the engine room can be adopted to facilitate light-weighting of the vehicle body.

Another object of the present application is to propose a vehicle, and a body of the vehicle is provided with the lower vehicle-body front structure as described above.

Compared with related art, the vehicle according to the present application has same beneficial effects as the lower vehicle-body front structure, which will not be repeatedly described in detail here.

### BRIEF DESCRIPTION OF THE DRAWINGS

The drawings which form a part of the present application, are used to provide a further understanding of the present application. Illustrative embodiments of the present application and their descriptions are intended to explain the present application in which related directional words such as front, rear, above and below are only used to express a relative positional relationship, and not constructed as undue limitations on the present application. In the drawings:
FIG. 1 is a schematic diagram of an overall structure of a lower vehicle-body front structure according to an embodiment of the present application;
FIG. 2 is a schematic structural diagram of an energy absorption box of an upper transverse beam of a front engine room connected between surrounding components according to an embodiment of the present application;
FIG. 3 is a schematic diagram of a partial structure shown in FIG. 2;
FIG. 4 is an explosion diagram of respective components shown in FIG. 3;
FIG. 5 is a schematic diagram of an assembly and connection structure of a connecting seat and a front longitudinal beam of an engine room according to an embodiment of the present application;
FIG. 6 is a schematic structural diagram of a rear outer side of a connecting seat according to an embodiment of the present application;
FIG. 7 is a schematic structural diagram of a rear inner side of a connecting seat according to an embodiment of the present application;
FIG. 8 is an overall structural diagram of a front longitudinal beam of an engine room assembled in the lower vehicle-body front structure according to an embodiment of the present application;
FIG. 9 shows a schematic diagram of a three-dimensional structure of a front longitudinal beam of an engine room according to an embodiment of the present application from an external perspective;
FIG. 10 shows a schematic diagram of a three-dimensional structure of a front longitudinal beam of an engine room according to an embodiment of the present application from a perspective below an inner side;
FIG. 11 shows a schematic diagram of an overall assembly structure of a connecting structure of the rear end of the front longitudinal beam of the engine room according to an embodiment of the present application from the perspective below an inner side;
FIG. 12 is a schematic structural diagram of the connecting structure of the rear end of the front longitudinal beam of the engine room with the front longitudinal beam of the engine room removed according to an embodiment of the present application;
FIG. 13 is a schematic structural diagram of a rear side of a torsion box according to an embodiment of the present application; and
FIG. 14 is a top view of a lower vehicle-body front structure according to an embodiment of the present application.

### Description of reference numerals:

1. structural main body; 10. connecting part of longitudinal beam of engine room; 100. connecting hole of longitudinal beam; 101. connecting plate; 102. connecting cavity; 11. energy absorption part; 111. longitudinal plate body; 112, transverse plate body; 12. connecting part of front subframe; 120. mounting and connecting hole of front subframe ; 13. reinforcing plate body; 141. connecting hole of energy absorption box of front anti-collision beam; 142. pre-positioning post of energy absorption box of front anti-collision beam; 15. connecting bracket; 15a. front connecting bracket; 15b. rear connecting bracket; 150. fifth connecting hole; 16. radiator mounting bracket; 17. flanging; 18. lightening hole;
2. front longitudinal beam of engine room; 20. end; 200. cavity structure; 201. main beam body; 202. reinforcing beam body; 203. first connecting hole; 204. second connecting hole; 205. third connecting hole; 206. fourth connecting hole; 207. upper connecting plate; 208. rivet nut; 209. mounting part of shock absorber seat;
3. front anti-collision beam; 30. energy absorption box of front anti-collision beam; 300. extension section;
4. front subframe;
5. upper transverse beam of front engine room; 50. energy absorption box of upper transverse beam of front engine room; 51. connecting plate of transverse beam; 500. connector; 501. plate body; 502. sixth connecting hole;
6. rear transverse beam of engine room; 60. torque box; 600. main plate body; 61. connecting piece; 601. reinforcing rib plate; 602. cavity chamber; 603. connection surface of sill beam; 604. connection surface of front transverse beam; 610. mounting point of front subframe; 62. support beam; 620. bottom end surface; 621. front end surface; 63. cavity body;
7. side beam of front wheel cover; 8. bolt; 9. front shock absorber seat; 90. connection table.

### DETAILED DESCRIPTION

It should be noted that the embodiments in the present application and the characteristics in the embodiments can be combined mutually in the case of no conflict.
it should be noted In description of the present application that if terms such as "upper", "lower", "inner" and "rear" appear to indicate an orientation or positional relationship, they are based on orientation or positional relationships shown in the drawings, only facilitate describing of the present application and simplifying the description, rather than indicate or imply that the device or element referred to must have a specific orientation, be configured and operated in a specific orientation, and thus cannot be understood as a limitation on the present application. Terms "first" and "second" are only used for descriptive purposes and cannot be understood as indicating or implying relative importance.

In addition, in description of the present application, unless otherwise specified, terms "mounting", "connecting", "coupling" and "connector" should be understood in a broad sense. For example, "connecting" can be "fixedly connecting", or "detachably connecting" or "integrally connecting", or it can be "mechanically connecting" or "electrically connecting", or it can be "directly connecting" or "indirectly connecting through an intermediate medium", or it can be "communicating within two elements". For those ordinary skilled in the art, the specific meanings of the above terms in the present application can be understood in connection with specific situations.

The present application will be described in details with reference to drawings and in combination with embodiments.

This embodiment relates to a lower vehicle-body front structure, which can effectively improve collision protection performance of a front body.

In general, the lower vehicle-body front structure includes front longitudinal beams of an engine room respectively arranged at two sides, a front anti-collision beam connected between front ends of the front longitudinal beams of the engine room at the two sides, and a rear transverse beam of the engine room connected between rear ends of the front longitudinal beams of the engine room at the two sides. The front longitudinal beams of the engine room at the two sides are respectively connected to front shock absorber seats.

Both ends of the front anti-collision beam are provided with an extension section extending to outside of the front longitudinal beam of the engine room. Front ends of the front longitudinal beams of the engine room at the two sides are each connected to a front anti-collision beam assembly through a connecting seat, and a lower part of a rear side of a respective connecting seat is provided with an energy absorption part, and the energy absorption part is located at an outer side of the front longitudinal beam of the engine room and is projected towards a rear of the connecting seat.

Outer sides of the front shock absorber seats at the two sides are respectively connected to side beams of front wheel covers, and an upper transverse beam of the front engine room is connected between the side beams of the front wheel covers at the two sides, and the upper transverse beam of the front engine room is arched in a direction towards a front of a vehicle body, and an energy absorption box of the upper transverse beam of the front engine room is respectively connected between the upper transverse beam of the front engine room and each of the front shock absorber seats at the two sides. In a direction towards the front of the vehicle body, the energy absorption box of the upper transverse beam of the front engine room at each side is arranged to be inclined outward, and the extension section, the energy absorption part and the energy absorption box of the upper transverse beam of the front engine room are arranged in sequence in a direction pointing to a rear of the vehicle body.

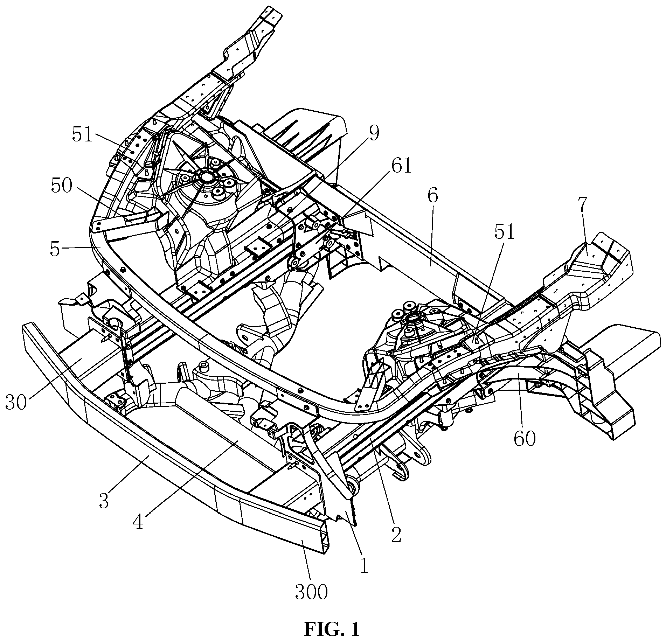

Based on above design idea, an exemplary structure of the lower vehicle-body front structure of this embodiment is shown in FIG. 1, which mainly includes a front longitudinal beam 2 of an engine room, a front anti-collision beam 3, a rear transverse beam 6 of the engine room, a front shock absorber seat 9, an upper transverse beam 5 of a front engine room, an energy absorption box 50 of the upper transverse beam of the front engine room, and so on.

For ease of understanding of solutions, firstly, general configuration of the body frame of the front engine room is illustrated.

As shown in FIG. 1, the front anti-collision beam 3, the front longitudinal beam 2 of the engine room, the rear transverse beam 6 of the front engine room and a side beam 7 of a front wheel cover are arranged in the body frame of the front engine room. The rear transverse beam 6 of the front engine room is connected between two torsion boxes 60 and located between a cockpit and the front engine room. Two front longitudinal beams 2 of the engine room symmetrically arranged in a left-and-right direction are located in a middle and lower part of the front engine room, with their rear ends fixedly connected to the rear transverse beam 6 of the front engine room and their front ends connected to the front anti-collision beam 3. A front subframe 4 is provided below the front longitudinal beam 2 of the engine room. In order to facilitate connection and assembly between the front anti-collision beam 3 and the front longitudinal beam 2 of the engine room, a connecting seat 1 is arranged between them. Obviously, there are two connecting seats 1 symmetrically arranged. Certainly, an energy absorption box 30 of the front anti-collision beam can be additionally provided between the front anti-collision beam 3 and the connecting seat 1, and the front anti-collision beam 3 and the energy absorption box 30 of the front anti-collision beam constitute a front anti-collision beam assembly. The front anti-collision beam 3 is connected to the connecting seat 1 through the energy absorption box 30 of the front anti-collision beam, which can improve overall collision safety of the vehicle.

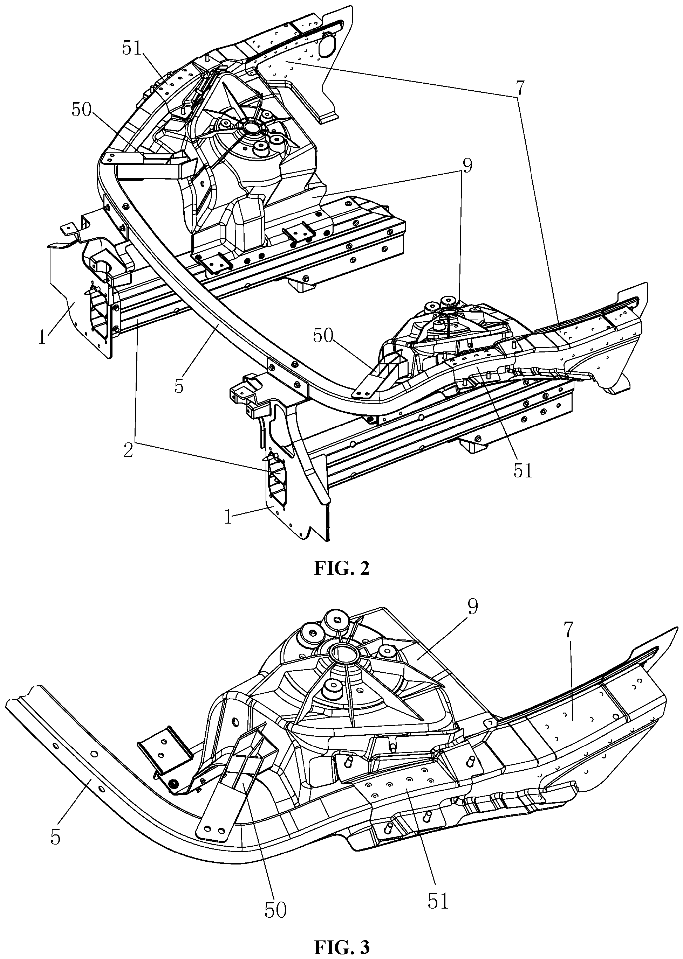

Taking the body frame of the front engine room as an example, as shown in FIG. 2, in the lower vehicle-body front structure according to this embodiment, the side beam 7 of the front wheel cover is connected to an outer side of the front shock absorber seat 9, the upper transverse beam 5 of the front engine room is partially bent, with a middle part arched towards a front of the vehicle body. Each of both ends of the upper transverse beam 5 of the front engine room extends backward from a respective one of both sides of the vehicle body, respectively, and is connected to the side beam 7 of the front wheel cover on a corresponding side. Two energy absorption boxes 50 of the upper transverse beam of the front engine room are respectively arranged close to the two sides of the vehicle body, and each energy absorption box 50 of the upper transverse beam of the front engine room is connected between the upper transverse beam 5 of the front engine room and the front shock absorber seat 9 at a corresponding side. With this arrangement, combined with the side beam 7 of the front wheel cover and the front shock absorber seat 9, the upper transverse beam 5 of the front engine room and the energy absorption box 50 of the upper transverse beam of the front engine room jointly form a frame-type reinforcement structure, which provides good reinforcement and buffering and energy-absorbing effect on an upper part of the front end of the vehicle body, thus improving collision protection performance of this part.

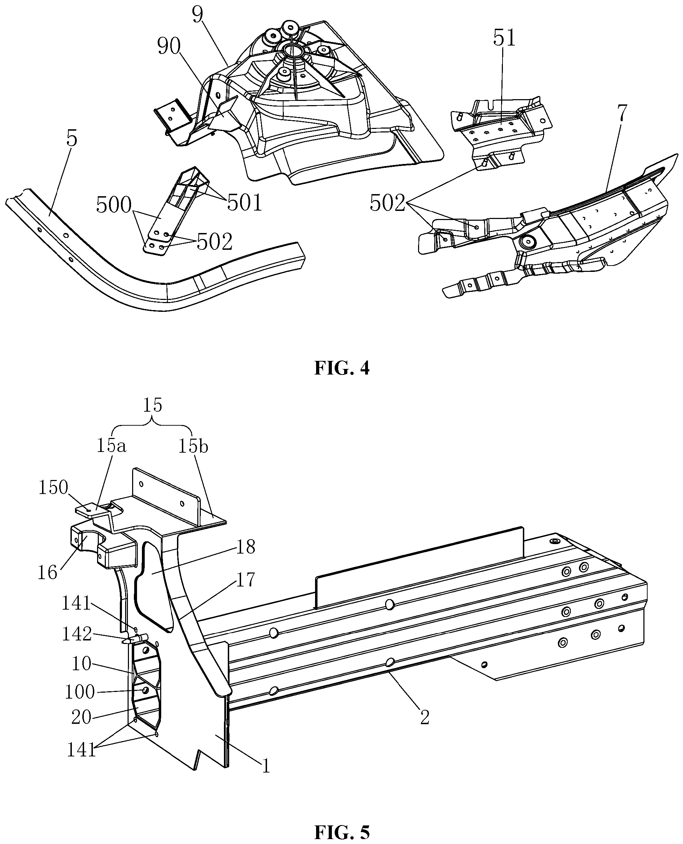

Connection between the upper transverse beam 5 of the front engine room and the side beam 7 of the front wheel cover can be made in a welded, screwed or inserted manner. As shown in FIG. 3 combined with FIG. 4, in this embodiment, left and right ends of the upper transverse beam 5 of the front engine room and a front end of the side beam 7 of the front wheel cover on the corresponding side are detachably connected. Moreover, each of both ends of the upper transverse beam 5 of the front engine room is connected to the side beam 7 of the front wheel cover at a corresponding side through a connecting plate 51 of the upper transverse beam. Specifically, the connecting plate 51 of the upper transverse beam can be fixedly connected at an end of the upper transverse beam 5 of the front engine room by means of bolts, riveting or welding, and then a detachable connecting structure is formed between the connecting plate 51 of the upper transverse beam and the side beam 7 of the front wheel cover.

A detachable connection structure is adopted between the upper transverse beam 5 of the front engine room and the side beam 7 of the front wheel cover, which facilitates replacement and maintenance of the upper transverse beam 5 of the front engine room. By fixing the connecting plate 51 of the upper transverse beam at the end of the upper transverse beam 5 of the front engine room in advance, and then connecting the connecting plate 51 of the upper transverse beam with the front end of the side beam 7 of the front wheel cover, an intermediate part is additionally provided between the upper transverse beam 5 of the front engine room and the side beam 7 of the front wheel cover, which not only facilitates respective construction and assembly, but also can alleviate an impact force transmitted to the side beam 7 of the front wheel cover by the impacted upper transverse beam 5 of the front engine room.

Based on above configuration, the connecting plate 51 of the upper transverse beam and the side beam 7 of the front wheel cover are preferably connected by a screw connection structure. That is, a plurality of sixth connecting holes 502 are formed in the front end of the front wheel side beam 7 and the connecting plate 51 of the upper transverse beam, and the front wheel side beam 7 and the connecting plate 51 of the upper transverse beam are fastened together by matching of bolts inserted into the sixth connecting holes 502 and nuts. With this screw connection structure, advantages of convenient assembly operations and reliable connection strength can be provided.

For arrangement of the upper transverse beam 5 of the front engine room, the upper transverse beam 5 of the front engine room can be arranged in a horizontal plane, or the upper transverse beam 5 of the front engine room can be arranged in an inclined posture. As shown in FIG. 2 and FIG. 3, along a direction towards the rear of the vehicle body, both ends of the upper transverse beam 5 of the front engine room extending in a direction towards the rear of the vehicle body in this embodiment are arranged in a gradually rising manner. In this way, an arched part of a front part of the upper transverse beam 5 of the front engine room can droop relatively, and when the upper transverse beam 5 of the front engine room is impacted by a large force, the upper transverse beam 5 of the front engine room can be turned downward and deformed, thus greatly alleviating an impact force and facilitating improved safety protection performance of the lower vehicle-body front structure.

A main function of the energy absorption box 50 of the upper transverse beam of the front engine room is to form a support between the upper transverse beam 5 of the front engine room and the front shock absorber seat 9, and it can absorb energy and buffer the impact force from the upper transverse beam 5 of the front engine room by its own deformation and collapse property. For a purpose of providing the energy absorption box 50 of the upper transverse beam of the front engine room, it is preferably arranged to be inclined outward, that is, the two energy absorption boxes 50 of the upper transverse beam of the front engine room extend obliquely outward along a direction towards a front of the vehicle body and are connected to the upper transverse beam 5 of the front engine room. With an arrangement in which the front part is inclined outward to both sides, the energy absorption box of the upper transverse beam 50 of the front engine room can be facilitated to be bent and deformed outward while collapsing and deforming itself, thus improving deformation and energy-absorbing effect of the energy absorption box of the upper transverse beam 50 of the front engine room, which is beneficial to further improving protective effect of the lower vehicle-body front structure.

As shown in FIG. 4, in order to facilitate the connection and assembly between the energy absorption box of the upper transverse beam 50 of the front engine room and the front shock absorber seat 9, the energy absorption box 50 of the upper transverse beam of the front engine room according to this embodiment is also detachably connected between the upper transverse beam 5 of the front engine room and the front shock absorber seat 9. Specifically, a connecting table 90 is provided at a side of the front shock absorber seat 9. One end of the energy absorption box 50 of the upper transverse beam of the front engine room is connected to the connecting table 90, and the other end of the energy absorption box 50 of the upper transverse beam of the front engine room is connected to the upper transverse beam 5 of the front engine room through a connector 500. The connector 500 can be two plate bodies integrally formed on the energy absorption box 50 of the upper transverse beam of the front engine room, which are arranged at intervals in an up-and-down direction, and the upper transverse beam 5 of the front engine room is clamped between the two plate bodies.

By arranging the connecting table 90 on the front shock absorber seat 9, connection and mounting between the energy absorption box 50 of the upper transverse beam of the front engine room and the front shock absorber seat 9 can be facilitated. With arrangement of the connector 500 at a front end of the energy absorption box 50 of the upper transverse beam of the front engine room, connection and assembly between the energy absorption box 50 of the upper transverse beam of the front engine room and the upper transverse beam 5 of the front engine room can be facilitated. Similarly, the front end of the energy absorption box 50 of the upper transverse beam of the front engine room can be fastened by matching of bolts and nuts with the sixth connection holes 502 in the connector 500, and a rear end of the energy absorption box 50 of the upper transverse beam of the front engine room can generally be detachably connected to the connecting table 90 by screwing.

In order to enhance collapsing and energy absorption effect of the energy absorption box 50 of the upper transverse beam of the front engine room, the energy absorption box 50 of the upper transverse beam of the front engine room can adopt a multi-cavity structure, a box structure, or the like. In this embodiment, the energy absorption box 50 of the upper transverse beam of the front engine room is arranged in a grid shape formed by interweaving and connecting a plurality of plate bodies 501.

In addition, the upper transverse beam 5 of the front engine room is connected to the front longitudinal beams 2 of the engine room respectively arranged at the two sides in the vehicle body through connecting seats 1. Moreover, it is preferable that the energy absorption boxes 50 of the upper transverse beam of the front engine room at the two sides are arranged to correspond to an outer side of the connecting seat 1. The upper transverse beam 5 of the front engine room is fixedly connected to a top of the connecting seat 1 to form connection between the upper transverse beam 5 of the front engine room and the front longitudinal beams 2 of the engine room. The upper transverse beam 5 of the front engine room, the connecting seat 1, the front longitudinal beams 2 of the engine room, the front anti-collision beam 3 and the rear transverse beam 6 of the front engine room can jointly form a frame-type integral skeleton structure, which not only improves connection stability of the upper transverse beam 5 of the front engine room, but also facilitates improvement of the overall strength and protective performance of the body frame of the front engine room. With the energy absorption box 50 of the upper transverse beam of the front engine room being provided corresponding to the outer side of the connecting seat 1, multi-stage energy absorption can be achieved through front and rear arrangement of the connecting seat 1 and the energy absorption box 50 of the upper transverse beam of the front engine room while fully exerting a deformation and buffering function of the front arched structure in a middle part of the upper transverse beam 5 of the front engine room, which is also beneficial to improving protection ability of the front end of the vehicle body against small overlap impact.

As for a material of main components in the lower vehicle-body front structure according to this embodiment, the upper transverse beam 5 of the front engine room can be made of high-strength profiles, such as high-strength steel, and preferably, the upper transverse beam 5 of the front engine room is made of tubular beams. The energy absorption box 50 of the upper transverse beam of the front engine room is preferably extruded from an aluminum alloy.

With provision of the upper transverse beam 5 of the front engine room and the energy absorption box 50 of the upper transverse beam of the front engine room, a plurality of impact transmission and buffering paths are formed from the upper transverse beam 5 of the front engine room to the side beam 7 of the front wheel cover, from the upper transverse beam 5 of the front engine room to the energy absorption box 50 of the upper transverse beam of the front engine room, and between the upper transverse beam 5 of the front engine room and the connecting seat 1. A closed ring structure is formed at an upper part of the front engine room, so that safety performance of the front engine room under collision conditions is enhanced. The upper transverse beam 5 of the front engine room is detachably arranged, which not only does not affect maintenance of an air conditioner radiator, but also facilitates maintenance and replacement of the upper transverse beam 5 of the front engine room. Moreover, the frame composed of the front anti-collision beam 3, the upper transverse beam 5 of the front engine room, the front longitudinal beam 2 of the engine room and the rear transverse beam 6 of the engine room provides a closed cavity for the front engine room, which improves overall stiffness of the front engine room and is beneficial to improving torsional stiffness and NVH (Noise, Vibration and Harshness) performance of the whole vehicle.

To sum up, with provision of the upper transverse beam 5 of the front engine room with a front arched structure, both ends of the upper transverse beam 5 of the front engine room are respectively connected to front ends of the side beams 7 of the front wheel covers; and meanwhile, the energy absorption box 50 of the upper transverse beam of the front engine room is additionally provided between the upper transverse beam 5 of the front engine room and the front shock absorber seat 9, so that structural strength of an upper part of the front end of the vehicle body can be effectively improved. In addition, when the upper part of the front end of the vehicle body is subjected to impact from outside, the energy absorption box 50 of the upper transverse beam of the front engine room and the front arched structure of the upper transverse beam 5 of the front engine room can absorb kinetic energy due to their own deformation and collapse, which functions well in buffering and facilitates improved collision protection performance of the front end of the vehicle body.

In addition, as shown in FIG. 5 in conjunction with FIG. 1, in order to make the lower vehicle-body front structure according to this embodiment have functions of connection and upper protection, and function in buffering and absorbing energy against small overlap impact, a connecting seat is arranged between the front longitudinal beam 2 of the engine room and the front anti-collision beam 3. The connecting seat includes a structural main body 1, and a connecting part 10 of the longitudinal beam and an energy absorption part 11 arranged on the structural main body 1.

Specifically, the structural main body 1 preferably adopts a plate-like structure. In its assembled state, a front side of the structural main body is used to connect the front anti-collision beam 3, and the front longitudinal beam 2 of the engine room is located at a rear side of the structural main body 1. The connecting part 10 of the longitudinal beam of the engine room and the energy absorption part 11 are arranged at a rear side of the structural main body 1 corresponding to the front longitudinal beam 2 of the engine room, and can be at a middle or lower part of the structural main body. Preferably, the connecting part 10 of the longitudinal beam of the engine room and the energy absorption part 11 are arranged at the lower part of the structural main body 1. In addition, the energy absorption part 11 is arranged at an outer part of the connecting part 10 of the longitudinal beam of the engine room and protrudes in a direction towards a rear of the structural main body 1.

It should be noted that the small overlap impact from the front anti-collision beam 3 mostly occurs at its extension section 300 extending to the outer side of the front longitudinal beam 2 of the engine room. The extension section 300 can be bent toward the energy absorption part 11 when impacted, so that the energy absorption part 11 can absorb an impact force from the small overlap impact. Moreover, when viewed in a length direction of the vehicle body, the energy absorption part 11 should be arranged between the extension section 300 and the energy absorption box 50 of the upper transverse beam of the front engine room, thus forming a three-stage impact buffering structure layout in which the front anti-collision beam 3 and its energy absorption box 30, the energy absorption part 11 of the connecting seat and the energy absorption box 50 of the upper transverse beam of the front engine room are arranged in sequence, which greatly improves the collision protection performance of the vehicle.

Meanwhile, a connection hole 100 of the longitudinal beam for connecting the front longitudinal beam 2 of the engine room is respectively arranged on the connection part 10 of the longitudinal beam and the energy absorption part 11, so that the front longitudinal beam 2 of the engine room is connected and fastened to the connection part 10 of the longitudinal beam and the energy absorption part 11 at the same time, so as to ensure stability of support foundation of the energy absorption part 11.

With above arrangement, when the impact force generated by the small overlap impact at an end of the front collision beam 3 reaches the structural main body 1, the energy absorption part 11 located at a lower part of a rear side of the structural main body 1 and located at an outer side may bear the impact first, so as to be deformed and collapsed, so as to greatly alleviate an impact force transmitted to the front longitudinal beam 2 of the engine room.

Moreover, the structural main body 1 is designed as a plate structure, which is not only convenient for construction, but also suitable for arrangement requirements of the connection part 10 of the longitudinal beam, the energy absorption part 11 of the engine room and the like on the structural main body 1. Arrangement positions of the connecting part 10 of the longitudinal beam and the energy absorption part 11 of the engine room on the structural main body 1 can be avoided, and lightening holes 18 can be opened at other parts. Some flanging 17 can also be formed at a part of an edge of the structural main body 1. With provision of the flanging 17 and/or the lightening holes 18 on the structural main body 1, not only overall strength of the structural main body 1 can be improved, but also weight of the structural main body 1 can be effectively reduced. Obviously, only one or both of the flange 17 and the lightening hole 18 can be provided.

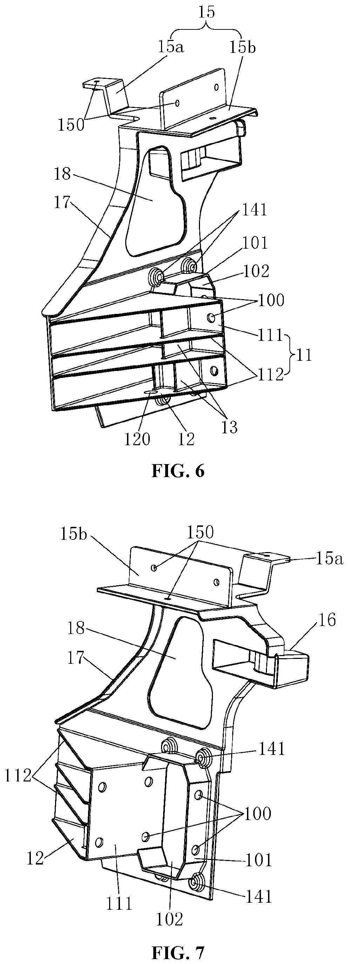

The energy absorption part 11 can be arranged in different structures, such as a box, a profile, a plate, a grid-like chamber, etc. In this embodiment, as shown in FIG. 6, the energy absorption part 11 as a whole gradually increases in a height protruding backward in a direction from an outermost side of the structural main body 1 towards the connecting part 10 of the longitudinal beam of the engine room. The energy absorption part 11 is designed as a gradual structure with a larger protrusion height as it gets closer to the connecting part 10 of the longitudinal beam of the engine room, which can exert gradual deformation and collapsing effect according to different impact forces, so as to achieve greater collapsing and energy-absorbing effect as it gets closer to the front longitudinal beam 2 of the engine room, which is beneficial to improving safety and effectiveness of the energy absorption part 11.

Specifically, the energy absorption part 11 includes a longitudinal plate body 111 fixedly connected to the structural main body 1 and a transverse plate body 112 fixedly connected between the structural main body 1 and the longitudinal plate body 111. Preferably, the longitudinal plate body 111 extends backward perpendicular to the structural main body 1. There are a plurality of transverse plate bodies 112 arranged at intervals in an up-and-down direction, which are perpendicular to both the structural main body 1 and the longitudinal plate body 111. The longitudinal plate body 111 is provided with a connection hole 100 of the longitudinal beam for fixing the front longitudinal beam 2 of the engine room.

With a structure of the longitudinal plate body 111 and the transverse plate bodies 112 intersecting vertically and horizontally, processing and construction can be facilitated, with good connection strength. Moreover, when the energy absorption part 11 is deformed and collapsed, remarkable energy-absorbing and buffering effect can be achieved.

In addition, a mounting and connection hole 120 of the front subframe may be provided at a bottom of the energy absorption part 11 for connecting and fixing the front subframe 4 of the vehicle. The mounting and connection hole 120 of the front subframe is arranged at a bottom of the energy absorption part 11, which can not only meet connection and mounting requirements of the lower vehicle-body front structure of the front subframe 4, but also is beneficial to weakening transmission of the impact force from the front anti-collision beam 3 to the front subframe 4 and has certain effect on buffer protection of the front subframe 4.

When the energy absorption part 11 adopts the structure of the longitudinal plate body 111 and the transverse plate bodies 112, a connecting part 12 of the front subframe can be arranged between a lowermost transverse plate body 112 and an adjacent transverse plate body 112, and the mounting and connection hole 120 of the front subframe is arranged on the connecting part 12 of the front subframe, and meanwhile, the mounting and connection hole 120 of the front subframe is provided with an opening on the lowermost transverse plate body 112. In addition, the connecting part 12 of the front subframe can be formed by the lowermost transverse plate body 112, and the mounting and connection hole 120 of the front subframe can also be changed into a connecting rod welded at a bottom of the transverse plate body 112, and connection with the front subframe 4 can be realized by the connecting rod.

Meanwhile, corresponding to the connecting part 12 of the front subframe, a reinforcing plate body 13 is arranged between two adjacent transverse plate bodies 112 above. Since the plurality of transverse plate bodies 112 are arranged at intervals in an up-and-down direction, the connecting part 12 of the front subframe is provided based on the lowermost transverse plate body 112, which facilitates connection and mounting of the front subframe 4 on the energy absorption part 11. With the reinforcing plate 13 being additionally provided between the adjacent transverse plate bodies 112, connection strength between the transverse plate bodies 112 can be improved, which is beneficial to ensuring seat capacity of the connecting part 12 of the front subframe and meets mounting requirements of the front subframe 4.

As shown in FIG. 6 combined with FIG. 7, the connecting part 10 of the longitudinal beam of the engine room according to this embodiment includes a connecting plate 101 fixedly connected to the structural main body 1. The connecting plate 101 is connected to the longitudinal plate body 111, and the connecting plate 101 is a semi-enclosed shape as a whole, and a connecting cavity 102 is defined between the connecting plate 101 and the longitudinal plate body 111, and an end 20 in the front of the front longitudinal beam 2 of the engine room is inserted into the connecting cavity 102. The connecting plate 101 is also provided with a plurality of connection holes 100 of the longitudinal beam for fixing the front longitudinal beam 2 of the engine room. A connecting plate 101 with two ends fixedly connected to the longitudinal plate body 111 is arranged at the connecting part 10 of the front longitudinal beam of the engine room of the structural main body 1, so that the connecting cavity 102 is formed by the connecting plate 101 and the longitudinal plate body 111 together, which facilitates inserting and connecting of the front longitudinal beam 2 of the engine room. The end 20 of the front longitudinal beam 2 of the engine room is fastened in the connecting cavity 102 through a plurality of longitudinal beam connecting holes 100 defined in the connecting plate 101 and the longitudinal plate body 111, and thus connection firmness between the structural main body 1 and the front longitudinal beam 2 of the engine room can be ensured. A specific fixing method can be to use bolts to pass through the connection hole 100 of the longitudinal beam and to be screwed into the threaded hole opened on the end 20, so as to realize fastening connection of the front longitudinal beam 2 of the engine room at the connecting part 10 of the longitudinal beam of the engine room.

As shown in FIG. 5 and FIG. 1, a lower part of a front side of the structural main body 1 is provided with a connecting hole 141 of the energy absorption box of the front anti-collision beam. When the energy absorption box 30 of the front anti-collision beam is arranged between the front anti-collision beam 3 and the structural main body 1, the energy absorption box 30 of the front anti-collision beam can be fastened in the connecting hole 141 of the energy absorption box of the front anti-collision beam by bolts. Specifically, two connecting holes 141 of the energy absorption box of the front anti-collision beam can be respectively opened at a top and a bottom of the connecting part 10 of the longitudinal beam of the engine room, and a pre-positioning post 142 of the energy absorption box of the front anti-collision beam is arranged at a position on the structural main body 1 adjacent to the connecting holes 141 of the energy absorption box of the front anti-collision beam. A positioning hole is provided on the energy absorption box 30 of the front anti-collision beam corresponding to the pre-positioning post 142 of the energy absorption box of the front anti-collision beam. In mounting the energy absorption box 30 of the front anti-collision beam, it is preferred to position the energy absorption box 30 of the front anti-collision beam by the pre-positioning post 142 of the energy absorption box of the front anti-collision beam, and to tighten the energy absorption box 30 of the front anti-collision beam by using bolts. With above arrangement, not only assembly operations can be facilitated, but also a position of the energy absorption box 30 of the front anti-collision beam is just opposite to the connecting part 10 of the longitudinal beam of the engine room and the energy absorption part 11, which is beneficial for an impact force from the small overlap impact from the energy absorption box 30 of the front anti-collision beam to be directly transmitted to the energy absorption part 11, and facilitates exerting of a function of buffering and energy-absorbing of the lower vehicle-body front structure.

In addition, a connecting bracket 15 is provided at a top of the structural main body 1, and the connecting bracket 15 can be arranged at a front side or a rear side of the structural main body 1, or at both the front side and the rear side. In this embodiment, the connecting bracket 15 includes a front connecting bracket 15a and a rear connecting bracket 15b, which are used for connecting a transverse locking and mounting beam of the engine room and a front-upper beam 5 of the engine room, respectively. Meanwhile, the two connecting brackets are provided with a fifth connecting hole 150, for fixing components by fasteners such as bolts. In this way, the front-upper beam 5 of the engine room and the transverse locking and mounting beam of the engine room can be centrally fixed on the connecting bracket 15.

Meanwhile, a radiator mounting bracket 16 is further provided on the structural main body 1 near the top for fixing a radiator. By arranging the connecting bracket 15 and/or the radiator mounting bracket 16 at the top of the structural main body 1, it is convenient to assemble components such as the front-upper beam 5 of the engine room, the transverse locking and mounting beam of the engine room, and the radiator in the engine room of the vehicle on the lower vehicle-body front structure, so that the lower vehicle-body front structure can provide centralized connection of multiple components.

The connection seat can be in a forged or cast piece, and welded with steel profile or aluminum profile. Preferably, cast aluminum is adopted for integral casting and molding. This configuration has characteristics of mature construction processes and light weight, with good deformation and collapsing performance of the energy absorption part 11, which is beneficial for the lower vehicle-body front structure to well exert buffering and energy-absorbing functions when the front body suffers small overlap impact.

For the connection seat according to this embodiment, secondary energy absorption and buffering of the front anti-collision beam 3 after energy absorption is realized with high collapsing property of aluminum alloy in a case of small overlap impact, and energy absorption effect can be flexibly adjusted through a rib structure of an aluminum casting. In a whole frame structure of the engine room, the connecting seat serves to connect at its upper and lower parts, with the front-upper beam 5 of the engine room, the transverse locking and mounting beam of the engine room, and the radiator being connected at the upper part, and the energy absorption box 30 of the front anti-collision beam 3, the front longitudinal beam 2 of the engine room and the front subframe 4 being connected at the lower part, so that a connecting structure at a front part of the whole frame structure is compact, centralized and simplified. Characteristics of high integration also simplify an assembly process of the frame.

Furthermore, the connecting seat described above is provided in the lower vehicle-body front structure according to this embodiment, and the connecting seat is mounted at the front end of the front longitudinal beam 2 of the engine room and connected to the front anti-collision beam 3 of the vehicle. By designing the energy absorption part 11 at an outer side of the structural main body 1, when the front anti-collision beam 3 is subjected to small offset impact from side front, the energy absorption part 11 may be collapsed and deformed after an impact force is transmitted to the structural main body 1, so as to absorb a part of impact energy. Only then can a remaining part of the impact force be transmitted to the front longitudinal beam 2 of the engine room, so that an impact force transmitted from the front longitudinal beam 2 of the engine room to a cockpit is weakened, which facilitates improved cushioning and energy absorption effect of the front body when it is subjected to small overlap impact.

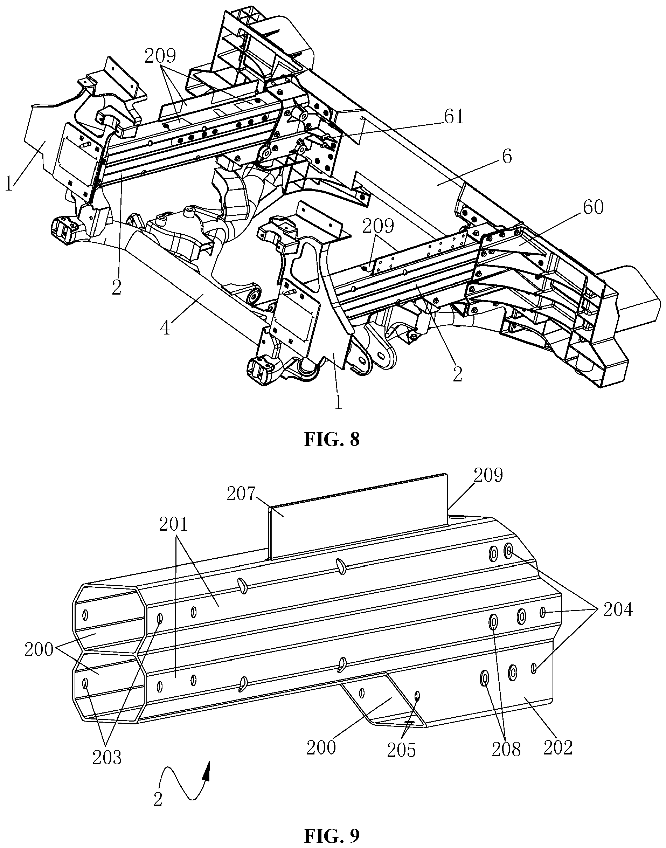

For the front longitudinal beam 2 of the engine room according to this embodiment, it is arranged in the lower vehicle-body front structure disclosed in the present application and plays an important role in supporting and transmitting a force. In order to exert good performance, as shown in FIGS. 8 to 10, it is preferable to adopt a following structure.

A longitudinal beam body of the front longitudinal beam 2 of the engine room includes a main body part and a reinforcement part. The main body part includes two main beam bodies 201 which are integrally connected in an up-and-down direction, and an interior of each main beam body 201 is arranged to be hollow, so that the main body part is provided with two cavity structures 200 arranged in the up-and-down direction. Moreover, the reinforcement part includes a reinforcement beam body 202 integrally and fixedly connected to a rear of the main body part, and an interior of the reinforcement beam body 202 is also arranged to be hollow, so that a rear of the longitudinal beam body is provided with three cavity structures 200 arranged in the up-and-down direction. In order to facilitate construction, the longitudinal beam body adopts an integrally extruded profile structure. With above arrangement, an energy absorption area at the front end of the longitudinal beam body is provided with two sections, and a connection area at a rear end is provided with three sections, so that strength can be improved and structural and performance requirements of different parts can be met.

Each of cross sections of the main beam body 201 and the reinforcing beam body 202 can be rectangular, hexagonal and in other different shapes. Preferably, in this embodiment, the cross section of the main beam body 201 is octagonal, and the cross section of the reinforcing beam body 202 is rectangular (preferably square). The cross section of the main beam body 201 is octagonal, so that cross sections of two parallel main body parts can be shaped like a number "8", which not only makes appearance of the main bodies standardized but also stabilizes structural strength of the main body parts, which meets design requirements for light-weighting. The cross section of the reinforcing beam body 202 adopts a rectangular structure, which is not only convenient for construction and molding, but also suitable for mounting and matching at a bottom and an upper part of the main body part. It should be emphasized once again that an octagonal cross-sectional structure of the main beam body 201 has high strength, and at the same time, it is less invasive to a surrounding space while ensuring that the cavity structure 200 is large enough, which facilitates rational layout of the space.

In order to facilitate assembly and connection of the longitudinal beam body with external components such as a front bumper and the rear transverse beam 6 of the front engine room, a front end of the main body part is provided with a front connection part, and a rear end of the main body part and the reinforcement part are provided with rear connection parts for connecting the longitudinal beam body with external components located at the front end and the rear end respectively. With arrangement of the front connecting part and the rear connecting part, it is convenient to connect the longitudinal beam body with external members at the front and rear ends, thus forming the body frame of the front engine room.

The front connecting part and the rear connecting part can be surfaces to be welded for welding connection, and can also be of a plug-in mounting structure. In this embodiment, the front connecting part includes first connecting holes 203 respectively provided on the two main beam bodies 201, and the rear connecting part includes second connecting holes 204 respectively arranged on the two main beam bodies 201 and the reinforcing beam body 202. Moreover, rivet nuts 208 can be provided in advance in some or all of the first connecting holes 203 and the second connecting holes 204, so that the longitudinal beam body and the external members can be fixedly connected by a riveting process. Connecting holes are used to integrally connect the longitudinal beam body and external components, which is convenient for connecting and assembling by means of screwing and riveting, and has characteristics of reliable connection performance and convenient assembly operations. Especially when riveting is adopted, connecting holes are arranged on both the main beam body 201 and the reinforcing beam body 202, and rivet nuts 208 are provided in part or all of the connecting holes, so that riveting connection strength at the connecting holes can be improved.

Front and rear ends of the longitudinal beam body can be specifically designed as a vertical plane-shaped notch in shape, or they can be in other shapes and structures.

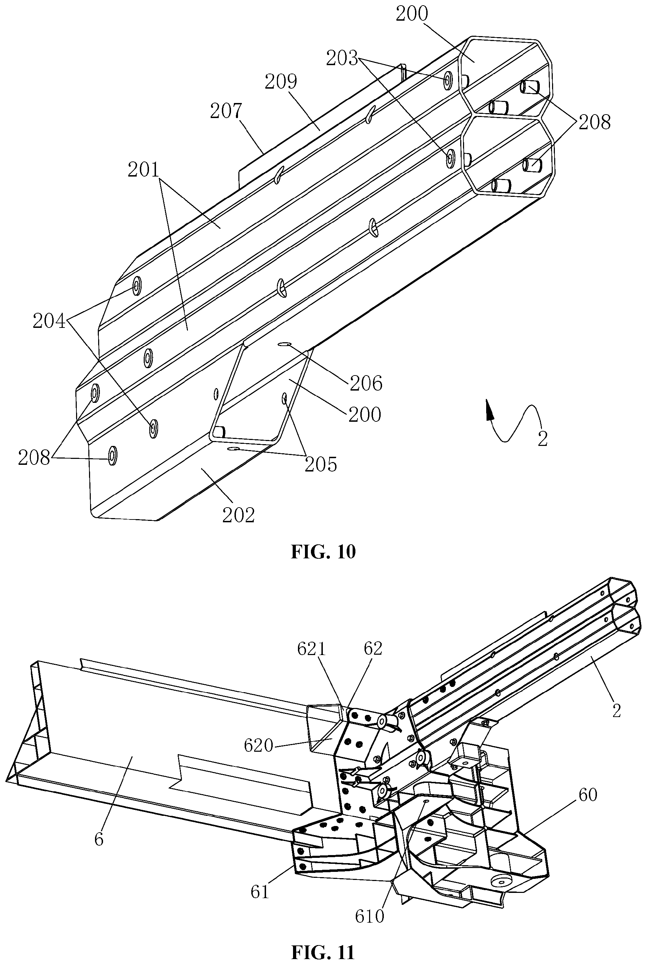

As shown in FIGS. 9 and 10, in each beam body in the longitudinal beam body, a front end of the reinforcing beam body 202 is inclined forward. In addition, a side and a bottom of the front end of the reinforcing beam body 202 are provided with a third connecting hole 205 for connecting the front subframe 4. Adjacent to the front end of the reinforcing beam body 202, a fourth connecting hole 206 is also provided at a bottom of the main beam body 201 below. The third connecting hole 205 and the fourth connecting hole 206 are matched to jointly mount the front subframe 4 under the longitudinal beam body. Preferably, the third connection hole 205 and the fourth connection hole 206 can also be connected to the front subframe 4 by the riveting process. When riveting is adopted, a rivet nut 208 can be provided in the third connection hole 205 and/or the fourth connection hole 206.

The front end of the reinforcing beam body 202 is inclined forward, which can effectively expand an assembly space at a bottom of the longitudinal beam body and provide convenient conditions for mounting and arrangement of the front subframe 4. Moreover, a shape of the reinforcing beam body 202 is adapted to characteristics of a path of an impact force transmitted from the front longitudinal beam 2 to the rear transverse beam 6 of the front engine room. The third connecting hole 205 and the fourth connecting hole 206 are arranged at bottoms of the reinforcing beam body 202 and its adjacent main beam body 201, which is convenient for mounting and connection of the front subframe 4 at a bottom of the front longitudinal beam 2 of the engine room.

The rear end of the main body is also preferably inclined forward. With this arrangement, a buffering space can be formed between the rear transverse beam 6 of the front engine room and an upper part of the front longitudinal beam 2 of the engine room, which is beneficial for the front longitudinal beam 2 of the engine room that has suffered too much impact to turn upward centering on its rear part when the vehicle collides seriously, thus reducing possibility that the front longitudinal beam 2 of the engine room moves straight backward and invades into the cockpit.

In addition, in this embodiment, an upper connecting plate 207 is provided at a top of the main body part. Preferably, the upper connecting plate 207 extends along a length direction of the main body part, is located at a rear part of the main body part, and is arranged close to an outer side of the main body part. Based on above arrangement, a mounting part 209 of a shock absorber seat is provided at an inner side of the upper connecting plate 207 and an inner side of the main body part below the upper connecting plate 207, and the mounting part 209 of the shock absorber seat is used for mounting and arranging the front shock absorber seat 9. The upper connecting plate 207 is arranged at a top of and close to an outer side of the main body part, so that a space for mounting the mounting part 209 of the shock absorber seat can be formed at an inner side of the upper connecting plate 207. By arranging mounting holes or the like on the top of the main body part at the inner side of the upper connecting plate 207 and the upper connecting plate 207, it is convenient to fix the front shock absorber seat 9 at the mounting part 209 of the shock absorber seat so as to mount the shock absorber of the engine assembly.

It can be seen from above description that the front longitudinal beam 2 of the engine room according to this embodiment conforms to characteristics of lightweight design and has good connection and load-seat strength. Based on above structural requirements, steel, aluminum alloy and other materials can be used to manufacture the longitudinal beam body. However, it is preferred that the longitudinal beam body is integrally extruded with the aluminum alloy. With aluminum profile being extruded to construct the longitudinal beam body, there are characteristics of mature construction processes and light weight, and the front longitudinal beam 2 of the engine room has good collapsing and deformation performance, which is beneficial to deformation and collapsing of the front longitudinal beam 2 of the engine room when the front body is seriously collided, so as to buffer and absorb energy and reduce risk of the front longitudinal beam 2 of the engine room moving straight backwards and invading into the cockpit.

For the front longitudinal beam 2 of the engine room described in this embodiment, the longitudinal beam body is designed with the main body part and the reinforcement part, and the reinforcement part is arranged at the rear part of the main body part, so that an overall weight of the longitudinal beam body can be reduced as much as possible while meeting high strength requirements of the rear part of the longitudinal beam body. Meanwhile, provision of the inner cavity structures 200 of the main body part and the reinforcement part can not only make the longitudinal beam body form a good strength support structure, but also greatly reduce self-weight of the longitudinal beam body while meeting overall connection and seat strength of the front longitudinal beam 2 of the engine room. Lightweight design of the front longitudinal beam 2 structure of the engine room can be adopted to facilitate light-weighting of the vehicle body.

Meanwhile, the longitudinal beam body is integrally extruded, parts are highly integrated, and the processes are simplified, which facilitates improved processing efficiency. Aluminum extrusion profile is adopted, which obviously improves light-weighting. Compared with a traditional steel front longitudinal beam, weight of a single vehicle can be reduced by about 12 kg. Moreover, by arranging a plurality of connection and mounting parts on the longitudinal beam body, surrounding components can be centrally mounted or directly integrated to the longitudinal beam body while simplifying a structure, thereby further simplifying working procedure and improving the efficiency.

In addition, when the rear end of the front longitudinal beam 2 of the engine room is connected to the rear transverse beam 6 of the engine room, a following connection structure of the rear end of the front longitudinal beam of the engine room is adopted.

As shown in FIG. 11 to FIG. 13, in this embodiment, corresponding to the front longitudinal beams 2 of the engine room at two sides, the rear transverse beam 6 of the engine room is also respectively provided with a support beam 62, and the support beam 62 is arranged at an upper part of the rear end of the front longitudinal beams 2 of the engine room and is abutted against and connected to the upper part of the rear end of the front longitudinal beams 2 of the engine room. In addition, as a preferred embodiment, the upper part of the rear end of the front longitudinal beam 2 of the engine room is also designed to be inclined forward, and meanwhile, the support beam 62 is arranged corresponding to the upper part of the rear end of the front longitudinal beam 2 of the engine room, and a bottom end surface 620 of the support beam 62 also forms a forward inclined guiding surface, and the upper part of the rear end of the front longitudinal beam 2 of the engine room at least partially extends below the inclined guiding surface and partially abuts against the bottom end surface 620. In such a set state, when the front longitudinal beam 2 of the engine room is subjected to a strong impact, the inclined guiding surface on the bottom end surface 620 can easily induce the front longitudinal beam 2 of the engine room to turn upward, thus slowly releasing the impact force, so as to absorb energy through deformation of the whole frame of the front engine room and reduce possibility of the front longitudinal beam 2 of the engine room invading into the cockpit.

As for the connecting assembly described above, it includes a connecting piece 61 located at an inner side the front longitudinal beam 2 of the engine room and a torsion box 60 located at outer side of the front longitudinal beam 2 of the engine room. The connecting piece 61 and the torsion box 60 are both connected between the front longitudinal beam 2 of the engine room and the rear transverse beam 6 of the engine room. The connecting assembly is designed as two parts, the connecting piece 61 and the torsion box 60, which are respectively arranged at the inner and outer sides of the rear transverse beam 6 of the front engine room, which not only facilitates connection and assembly between the front longitudinal beam 2 of the engine room and the rear transverse beam 6 of the front engine room, but also facilitates absorption of impact energy by the torsion box 60 when the front longitudinal beam 2 of the engine room turns from a root of the rear end, and functions in alleviating the impact.

Connection between the front longitudinal beam 2 of the engine room, the connecting assembly and the rear transverse beam 6 of the engine room can be bolt connection, riveting connection, welding connection, etc. In this embodiment, the rear end of the front longitudinal beam 2 of the engine room is provided with a plurality of rivet nuts 64, and the connecting piece 61 and the torsion box 60 are fixedly connected to the front longitudinal beam 2 of the engine room through bolts 8 matched on the rivet nuts 64. Meanwhile, the connecting piece 61 and the torsion box 60 are also both connected to the rear transverse beam 6 of the engine room by riveting. By riveting and adding rivet nuts 64, it not only facilitates connection and assembly between the front longitudinal beam 2 of the engine room and surrounding components, but also facilitates improved strength of a connection part of the components, especially suitable for connection and mounting between aluminum alloy profiles.

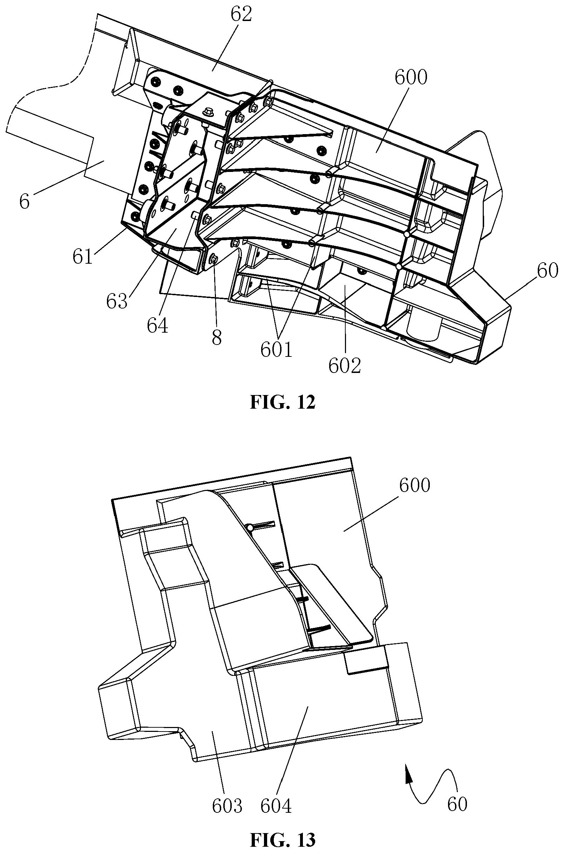

As for the structure of the connecting assembly, specifically, as shown in FIG. 12, the connecting piece 61 and the torsion box 60 are connected to each other at their tops and bottoms, so that a cavity body 63 is formed between the connecting piece and the torsion box, and a rear side of the rear transverse beam 6 of the engine room and the support beam 62 form a blockage for a rear port of the cavity body 63. At this moment, the rear end of the front longitudinal beam 2 of the engine room is inserted into the cavity body 63 from a front port of the cavity body 63, thus forming connection between the front longitudinal beam 2 of the engine room and the rear transverse beam 6 of the engine room. In this design, the cavity body 63 can serve to form good connection and fixation for the front longitudinal beam 2 of the engine room through connection between the torsion box 60 and the connecting piece 61 and a side wall of the front longitudinal beam 2 of the engine room. Moreover, because the front longitudinal beam 2 of the engine room is inserted into the cavity body 63, a good condition for the front longitudinal beam 2 of the engine room to turn upward or outward can be provided when the front longitudinal beam 2 of the engine room is strongly impacted.

As shown in FIG. 11, the support beam 62 can be in a form of steel sheet metal parts or extruded aluminum alloy parts. Structurally, the support beam 62 is generally in a form of a right-angle connecting piece, which is conformally attached to the rear transverse beam 6 of the engine room, an inner side of the front longitudinal beam 2 of the engine room, and a front end surface 621 and a bottom end surface 620 of the support beam 62, and is fixedly connected to respective components at the same time. Except that a part of the connecting piece 61 is conformally arranged on the bottom end surface 620 and the front end surface 621 of the support beam 62 and is fixedly connected to the support beam 62, it is preferable to extend a part of the connecting piece 61 below the front longitudinal beam 2 of the engine room, and provide a mounting point 610 of the front subframe at this position. The mounting point 610 of the front subframe is arranged at a bottom of the connecting piece 61, thus providing a firm mounting point of the front subframe 4 and facilitating mounting and arrangement of the front subframe 4 under the front longitudinal beam 2 of the engine room. The connecting part 12 of the front subframe described above and the mounting point 610 of the front subframe provided on the connecting part 61 described below can be both used as the connecting point of the front subframe.

The torsion box 60 is connected to an outer side of the front longitudinal beam 2 of the engine room and the rear transverse beam 6 of the engine room. Meanwhile, an inner side of an upper part of the torsion box 60 abuts against an end of the support beam 62 and is fixedly connected to the support beam 62. In this way, respective connecting assemblies between the front longitudinal beam 2 of the engine room and the rear transverse beam 6 of the engine room are integrally connected around the cavity body 63. The bottom end face 620 and the front end face 621 of the support beam 62 are partially covered by the connecting piece 61, and the connecting piece 61 is fixedly connected to the rear transverse beam 6 of the front engine room, the front longitudinal beam 2 of the engine room and the support beam 62 at the same time, which improves overall firmness between the support beam 62 and several adjacent components, thus providing stable mounting foundation for the front longitudinal beam 2 of the engine room.

With provision of the torsion box 60, not only a connecting function can be realized, but also a situation that the front longitudinal beam 2 of the engine room turns and bends outward due to an oblique outward impact force when the vehicle is subjected to overlap impact can be dealt with. At this time, absorption of an impact force can be relieved to a great extent by collapsing characteristics of the torsion box 60 due to its own deformation.

Based on above requirements, the torsion box 60 can take a form of a box, a multi-grid cavity or other structures. Specifically, the torsion box 60 according to this embodiment includes a main plate body 600 and a reinforcing rib plate 601 provided at a side of the main plate body 600. There are a plurality of reinforcing rib plates 601 arranged in transverse and longitudinal directions. In addition, at least part of the reinforcing rib plates 601 are interwoven and connected so as to define a plurality of cavity chambers 602. The torsion box 60 adopts a grid-like cavity chamber 602 structure, which has stable supporting effect, and can absorb large amount of impact energy through its own deformation and collapsing and have good buffering and energy absorption effect.

In addition, as shown in FIG. 12 in conjunction with FIG. 13, in an overall structure of the torsion box 60, a part of the torsion box 60 located at an outer side extends beyond an end of the rear transverse beam 6 of the engine room, thus forming a connection surface 603 of a sill beam connected to the sill beam 70. Furthermore, a part of a lower part of the torsion box 60 can be extended downward, and a connection surface 604 of the front transverse beam for connecting a front transverse beam of a front floor can be formed below the rear transverse beam 6 of the front engine room. Naturally, one or both of the connection surface 603 of the sill beam and the connection surface 604 of the front transverse beam may be provided.

By extending a part of the outer side of the torsion box 60 to form a connecting surface for connecting the sill beam 70 and the front transverse beam of the front floor, the torsion box 60 can be caused to form an intermediate part, connecting surrounding components such as the front longitudinal beam 2 of the engine room, the rear transverse beam 6 of the front engine room, the sill beam 70 and the front transverse beam of the front floor, with a reasonable assembly structure and convenient assembling.

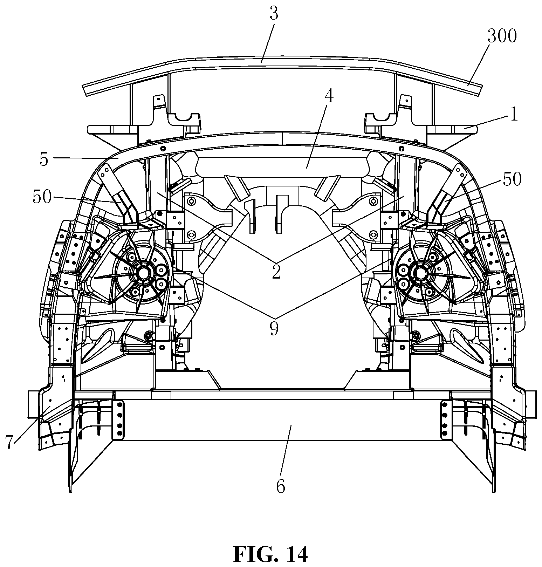

As shown in FIG. 14, in order to fully exert functions of the torsion box 60 in a case of a strong collision, the two front longitudinal beams 2 of the engine room are preferably arranged to be inclined outward in a whole frame structure of the front engine room. That is, in a direction towards the front of the vehicle body, the front longitudinal beams 2 of the engine room at two sides are arranged to be inclined outward to both sides of the vehicle body. In this way, the strong collision can induce the front longitudinal beam 2 of the engine room to turn outward, so that the torsion box 60 collapses and absorbs energy to alleviate influence of the collision on an interior of the cockpit. An outward inclined angle relative to the length direction of the vehicle body can be set to be about 10°, as long as layout of components in the front engine room is not affected.

For the connecting structure at the rear end of the front longitudinal beam of the engine room described in this embodiment, by constructing a forward-inclined shape at the upper part of the rear end of the front longitudinal beam 2 of the engine room and cooperating with inclined guiding of the bottom end surface 620 of the supporting beam 62, the front longitudinal beam 2 of the engine room turns upward from its rear end when an impact force from the front of the front longitudinal beam 2 of the engine room is too large, and thus a force from the impact is directed in an upward-inclined direction, so as to help reduce possibility of the front longitudinal beam 2 of the engine room invading into the cockpit when it is impacted by front collision.

To sum up, in the lower vehicle-body front structure according to this embodiment, buffering and energy-absorbing structures are designed from multiple perspectives and at multiple levels, and most of components are designed to be lightweight, which greatly improves overall structural strength and collision protection performance of the front frame of the vehicle body.

Finally, this embodiment also relates to a vehicle, a body of the vehicle is provided with the lower vehicle-body front structure as described above.

The above description is only the preferred embodiments of the present application, and it is not intended to limit the present application. Any modification, equivalent substitution, improvement, etc. made within the spirit and principle of the present application shall be encompassed within the protection scope of the present application.

## Claims

1. A lower vehicle-body front structure, comprising front longitudinal beams (2) of an engine room respectively arranged at two sides, a front anti-collision beam (3) connected between front ends of the front longitudinal beams (2) of the engine room at the two sides, and a rear transverse beam (6) of the engine room connected between rear ends of the front longitudinal beams (2) of the engine room at the two sides, wherein the front longitudinal beams (2) of the engine room at the two sides are respectively connected to front shock absorber seats (9), **characterized in that**
both ends of the front anti-collision beam (3) are respectively provided with an extension section (300) extending to outside of the front longitudinal beam (2) of the engine room;
front ends of the front longitudinal beams (2) of the engine room at the two sides are both connected to the front anti-collision beam (3) through connecting seats, and a lower part of a rear side of each of the connecting seats is provided with an energy absorption part (11), and the energy absorption part (11) is located at an outer side of the front longitudinal beam (2) of the engine room and is projected towards a rear of the connecting seat;
outer sides of the front shock absorber seats (9) at the two sides are respectively connected to side beams (7) of front wheel covers, and an upper transverse beam (5) of the front engine room is connected between the side beams (7) of the front wheel covers at the two sides, the upper transverse beam (5) of the front engine room is arched in a direction towards a front of a vehicle body, and an energy absorption box (50) of the upper transverse beam of the front engine room is respectively connected between the upper transverse beam (5) of the front engine room and each of the front shock absorber seats (9) at the two sides; and
in a direction pointing to the front of the vehicle body, the energy absorption box (50) of the upper transverse beam of the front engine room at each side is arranged to be inclined outward, and the extension section (300), the energy absorption part (11) and the energy absorption box (50) of the upper transverse beam of the front engine room are arranged in sequence in a direction pointing to a rear of the vehicle body.

2. The lower vehicle-body front structure according to claim 1, **characterized in that**
each end of the upper transverse beam (5) of the front engine room is detachably connected to the side beam (7) of the front wheel cover at a corresponding side, and the energy absorption box (50) of the upper transverse beam of the front engine room is detachably connected between the upper transverse beam (5) of the front engine room and each of the front shock absorber seats (9); and/or,
along a direction towards the rear of the vehicle body, both ends of the upper transverse beam (5) of the front engine room connected to the side beams (7) of the front wheel covers at the two sides are arranged in a gradually rising manner; and the energy absorption box (50) of the upper transverse beam of the front engine room is in a grid shape formed by interweaving and connecting a plurality of plate bodies (501).

3. The lower vehicle-body front structure according to claim 1, **characterized in that**
each of the connecting seats comprises a structural main body (1);
the energy absorption part (11) is located at a lower part of a rear side of the structural main body (1), and a connecting part (10) of the longitudinal beam of the engine room is provided at an inner side of the energy absorption part (11);
the connecting part (10) of the longitudinal beam of the engine room and the energy absorption part (11) are respectively provided with longitudinal-beam connecting holes (100) for connecting the longitudinal beam of the engine room; and
a protruding height of the energy absorption part (11) gradually increases along a direction to the front longitudinal beam (2) of the engine room.

4. The lower vehicle-body front structure according to claim 3, **characterized in that**
the energy absorption part (11) comprises a longitudinal plate body (111) fixedly connected to the structural main body (1) and a transverse plate body (112) fixedly connected between the structural main body (1) and the longitudinal plate body (111), and the connecting part (10) of the longitudinal beam of the engine room comprises a connecting plate (101) fixedly connected to the structural main body (1);
a plurality of transverse plate bodies (112) are arranged at intervals in an up-and-down direction, the connecting plate (101) is connected to the longitudinal plate body (111), and a connecting cavity (102) where an end (20) of the longitudinal beam of the engine room is capable to be inserted is defined between the connecting plate (101) and the longitudinal plate body (111); and
the longitudinal plate body (111) and the connecting plate (101) are respectively provided with the longitudinal-beam connecting holes (100).

5. The lower vehicle-body front structure according to claim 3, **characterized in that**
a connecting bracket (15) and a radiator mounting bracket (16) are provided at a top of the structural main body (1); and
the upper transverse beam (5) of the front engine room is detachably connected to the connecting bracket (15) on each of the connecting seats.

6. The lower vehicle-body front structure according to claim 1, **characterized in that**
the front longitudinal beam (2) of the engine room comprises a longitudinal beam body, and the longitudinal beam body is provided with a main body part and a reinforcing part;
the main body part comprises two main beam bodies (201) which are integrally connected in an up-and-down direction, and an interior of each main beam body (201) is hollow, so that the main body part is provided with two cavity structures (200) arranged in the up-and-down direction; and
the reinforcement part includes a reinforcement beam body (202) integrally and fixedly connected to a rear of the main body part, and an interior of the reinforcement beam body (202) is hollow, so that a rear of the longitudinal beam body is provided with three cavity structures (200) arranged in the up-and-down direction.

7. The lower vehicle-body front structure according to claim 6, **characterized in that**
a cross section of the main beam body (201) is octagonal in shape, and a cross section of the reinforcing beam body (202) is rectangular in shape;
an upper connecting plate (207) is provided at a top of the main body part, and the upper connecting plate (207) extends along a length direction of the main body part and is located at the rear of the main body part, and the upper connecting plate (207) is arranged close to an outer side of the main body part; and
an inner side of the upper connecting plate (207) and an inner side of the main body part below the upper connecting plate (207) are configured to be connected to the front shock absorber seats (9).

8. The lower vehicle-body front structure according to claim 1, **characterized in that**
rear ends of the front longitudinal beams (2) of the engine room at the two sides are respectively connected to the rear transverse beam (6) of the engine room through connecting assemblies, and support beams (62) are respectively arranged on the rear transverse beam (6) of the engine room, corresponding to the front longitudinal beams (2) of the engine room; and
each of the support beams (62) is arranged at an upper part of a rear end of the corresponding front longitudinal beam (2) of the engine room and is abutted against and connected to the upper part of the rear end of the front longitudinal beam (2) of the engine room.

9. The lower vehicle-body front structure according to claim 8, **characterized in that**
the upper part of the rear end of the front longitudinal beam (2) of the engine room is inclined forward;
each of the support beams (62) is arranged corresponding to the upper part of the rear end of the front longitudinal beam (2) of the engine room, and a bottom end surface (620) of each of the support beams (62) is in a form of a forward inclined guiding surface; and
the upper part of the rear end of the front longitudinal beam (2) of the engine room at least partially extends below the inclined guiding surface.

10. The lower vehicle-body front structure according to claim 8, **characterized in that**
each of the connecting assemblies includes a connector (500) positioned at an inner side of the front longitudinal beam (2) of the engine room and a torsion box (60) positioned at an outer side of the front longitudinal beam (2) of the engine room; and
the connecting plate (500) and the torsion box (60) are connected and enclose to form a cavity body (63) therebetween, the rear transverse beam (6) of the engine room and the support beams (62) form a blockage for a rear port of the cavity body (63), and the rear end of the front longitudinal beam (2) of the engine room is inserted into the cavity body (63) through a front port of the cavity body (63).

11. The lower vehicle-body front structure according to claim 10, **characterized in that**
the torsion box (60) comprises a main plate body (600) and a reinforcing rib plate (601) arranged at a side of the main plate body (600); and
a plurality of reinforcing rib plates (601) are arranged in transverse and longitudinal directions, and at least part of the plurality of reinforcing rib plates (601) are interwoven and connected to define a plurality of cavity chambers (602).

12. The lower vehicle-body front structure according to claim 8, **characterized in that**
connecting points of a front subframe are respectively provided at bottoms of the connecting seats, the front longitudinal beams (2) of the engine room and the connecting assemblies; and
the lower vehicle-body front structure further comprises a front subframe (4) connected by the connecting points of the front subframe.

13. The lower vehicle-body front structure according to any one of claims 1 to 12, **characterized in that**
in the direction pointing to the front of the vehicle body, the front longitudinal beams (2) of the engine room at the two sides are arranged to be inclined outwards to the two sides of the vehicle body; and
the front anti-collision beam (3) is connected to the connecting seat through the energy absorption box (30) of the front anti-collision beam, and the upper transverse beam (5) of the front engine room is adopted in a form of a tubular beam.

14. The lower vehicle-body front structure according to claim 13, **characterized in that**
the connecting seats are integrally cast and formed of cast aluminum, and the front longitudinal beams (2) of the engine room and the rear transverse beam (6) of the engine room are integrally extruded and formed of aluminum alloy.

15. A vehicle, **characterized in that**
a body of the vehicle is provided with the lower vehicle-body front structure according to any one of claims 1 to 14.
